# EUROPEAN PATENT APPLICATION

(11) **EP 4 549 048 A1**
(43) Date of publication of application: **07.05.2025**
(21) Application number: 23831127.8
(22) Date of filing: 15.06.2023
(51) Int. Cl.: B21J 15/00, B21J 15/02, F16B 5/00, F16B 15/00, F16B 15/06

(54) **RIVETING METHOD AND FASTENED OBJECT**

(30) Priority: 01.07.2022 JP 2022106834
(71) Applicant: Nippon Light Metal Company, Ltd., Tokyo 105-0004 (JP); Shibaura Institute of Technology, Tokyo 135-8548 (JP)
(72) Inventor: HORI Hisashi, Shizuoka-shi, Shizuoka 421-3203 (JP); HASHIMURA Shinji, Tokyo 135-8548 (JP)
(74) Representative: Kiwit, Benedikt
(86) International application number: PCT/JP2023/022241
(87) International publication number: WO 2024/004679

(57) **Abstract**

A metal rivet (1a) set in a position separated from a surface (50b) of a second material (50) to be fastened is moved toward a position of a prepared hole (41), and the rivet (1a) is driven in the order of the second material (50) to be fastened and a first material (40) to be fastened to arrive inside the prepared hole (41). The prepared hole (41) includes a hole portion (43) having an inner wall surface that is a tapered substantially cone shape or substantially truncated cone shape, the rivet (1a) has a tapered first shaft part (3), the depth of the hole portion (43) is deeper than the length of the first shaft part (3), the first shaft part (3) has a distal portion (3a1) which shrinks in diameter toward the distal side, the outer peripheral surface of the first shaft part (3) is engraved with a spiral groove (3b) from the proximal side to the distal side, and the relationship between a depth (H) of an opening (42) and a thickness (T) of the driven position of the rivet (1a) of the second material (50) to be fastened is 0.25×T<H<0.75×T.

## Description

### TECHNICAL FIELD

The present invention relates to a riveting method and a fastened product.

### BACKGROUND ART

Bolt fastening is generally known as a method of mechanically fastening a lid made of an aluminum alloy to a casted object made of an aluminum alloy.

Moreover, there is known self-tapping fastening in which a to-be-fastened member is fastened while a thread groove is formed in the to-be-fastened member by using a self-tapping screw.

Meanwhile, a technique described in Patent Literature 1 is proposed as a riveting method in which a rivet in which a helical groove is carved is moved at high speed to fasten two members to each other. In the technique described in Patent Literature 1, first, a back surface of one metal plate is laid on a front surface of the other metal plate. Then, a metal rivet set at a position away from a front surface of the one metal plate is moved at high speed in a non-rotating state, and is made to be screwed into the one metal plate and the other metal plate in this order while being rotated. The used rivet includes a disc-shaped head portion and a shaft portion with a tapered shape provided in a center portion of the head portion. Moreover, a helical groove is carved on an outer peripheral surface of the shaft portion from the tip end side toward the base end side.

### CITATION LIST

### Patent Literature

Patent Literature 1: JP 2019-39535A

### SUMMARY OF INVENTION

### Technical Problem

However, assume a case where the to-be-fastened members are a plate member or the like and a material with a large thickness such as a block member or the like. In this case, if the to-be-fastened members in a state where a back surface of the plate member or the like is laid on a front surface of the block member or the like are attempted to be fastened to each other by driving a rivet from a front surface of the plate member or the like to the to-be-fastened members, there is a risk that leak occurs in a fastened product and sufficient joint strength cannot be obtained.

In view of the above viewpoints, an object of the present invention is to provide a riveting method and a fastened product that suppress occurrence of leak in the fastened product and in which sufficient joint strength can be obtained.

### Solution to Problem

In order to solve such problems, a first invention is a riveting method including: a preparation step of laying a back surface of a second to-be-fastened member on a front surface of a first to-be-fastened member having a prepared hole; and a riveting step of moving a metal rivet set at a position away from a front surface of the second to-be-fastened member toward a position of the prepared hole, and driving the rivet into the second to-be-fastened member and the first to-be-fastened member in this order to cause the rivet to reach an inside of the prepared hole. The prepared hole includes a hole portion having an inner wall surface with a substantially cone shape or a substantially truncated cone shape that is a tapered shape and an opening portion that spreads and opens in a tapered shape from the hole portion toward the front surface of the second to-be-fastened member, the rivet includes a first shaft portion with a tapered shape, the first shaft portion includes a tip end portion whose diameter decreases toward a tip end side, a groove is carved on an outer peripheral surface of the first shaft portion from a base end side toward the tip end side of the first shaft portion, and 0.25×T<H<0.75×T is satisfied, where H is a depth of the opening portion and T is a thickness of the second to-be-fastened member at a driving position of the rivet.

It is preferable that a taper angle of the opening portion is 70 to 110°.

An opening diameter of the hole portion is preferably larger than a diameter of a base end portion of the first shaft portion.

A relationship between an opening diameter φ1 of the hole portion and a diameter φ2 of a base end portion of the first shaft portion is preferably 1.0×φ2<φ1≤1.1×φ2.

A taper angle of the hole portion is preferably 2 to 10°.

It is preferable that the rivet further includes a head portion extending from a base end of the first shaft portion, the first shaft portion extends downward from the head portion, the head portion includes a center portion connected to the first shaft portion and a peripheral edge portion spreading outward from the center portion, and a diameter of the peripheral edge portion is larger than a diameter of the first shaft portion.

The head portion preferably has an umbrella shape in which the peripheral edge portion spreads while being tilted toward the first shaft portion side.

A thickness of the peripheral edge portion of the head portion is preferably 0.1 to 2.0 mm.

A tilt angle of the head portion is preferably 5 to 30°.

It is preferable that the groove is a helical groove formed in a helical shape on an outer surface of the first shaft portion, and in the riveting step, the rivet set at the position away from the front surface of the second to-be-fastened member is moved toward the position of the prepared hole in a non-rotating state, and is made to reach the inside of the prepared hole by being screwed into the second to-be-fastened member and the first to-be-fastened member in this order while being rotated.

A helical angle of the helical groove is preferably 60 to 360°.

It is preferable that the rivet further includes a second shaft portion extending from the head portion, on the opposite side of the head portion to the first shaft portion, and in the riveting step, an auxiliary member having a holding portion configured to hold the second shaft portion is used, and the rivet is moved toward the position of the prepared hole together with the auxiliary member with the auxiliary member holding the second shaft portion.

The first to-be-fastened member and the second to-be-fastened member are preferably made of aluminum or an aluminum alloy.

Moreover, it is preferable that the first to-be-fastened member is made of aluminum or an aluminum alloy, and the second to-be-fastened member is a plate member made of a resin.

The first to-be-fastened member is preferably a casted member.

Moreover, a second invention is a fastened product including: a first to-be-fastened member having a prepared hole; a second to-be-fastened member whose back surface is laid on a front surface of the first to-be-fastened member; and a metal rivet driven into the second to-be-fastened member and the first to-be-fastened member in this order to reach an inside of the prepared hole. The prepared hole includes a hole portion having an inner wall surface with a substantially cone shape or a substantially truncated cone shape that is a tapered shape and an opening portion that spreads and opens in a tapered shape from the hole portion toward a front surface of the second to-be-fastened member, the rivet includes a first shaft portion with a tapered shape, a depth of the hole portion is deeper than a length of the first shaft portion, the first shaft portion includes a tip end portion whose diameter decreases toward a tip end side, a groove is carved on an outer peripheral surface of the first shaft portion from a base end side toward the tip end side of the first shaft portion, and 0.25×T<H<0.75×T is satisfied, where H is a depth of the opening portion and T is a thickness of the second to-be-fastened member at a driving position of the rivet.

### Advantageous Effects of Invention

The riveting method and the fastened product according to the present invention can suppress occurrence of leak in the fastened product and provide sufficient joint strength.

### BRIEF DESCRIPTION OF DRAWINGS

[FIG. 1]

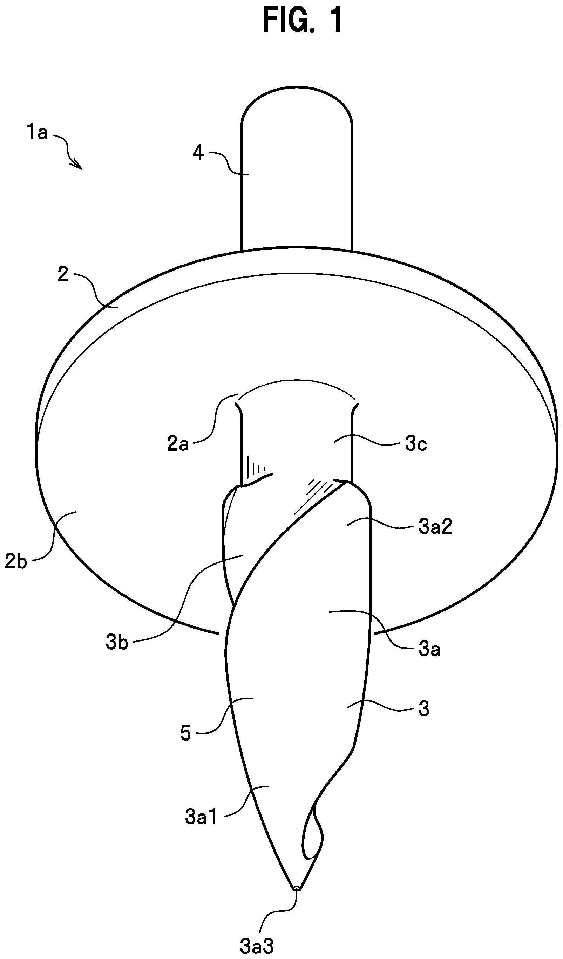

   FIG. 1 is an exterior perspective view of a rivet used in an embodiment of the present invention.
[FIG. 2]

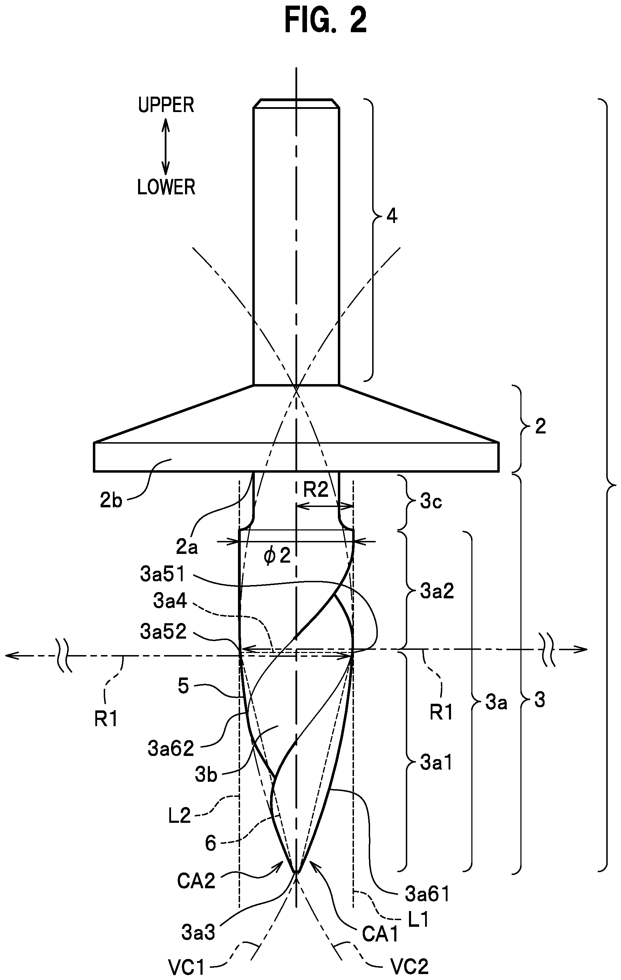

   FIG. 2 is a side view of the rivet used in the embodiment of the present invention.
[FIG. 3]

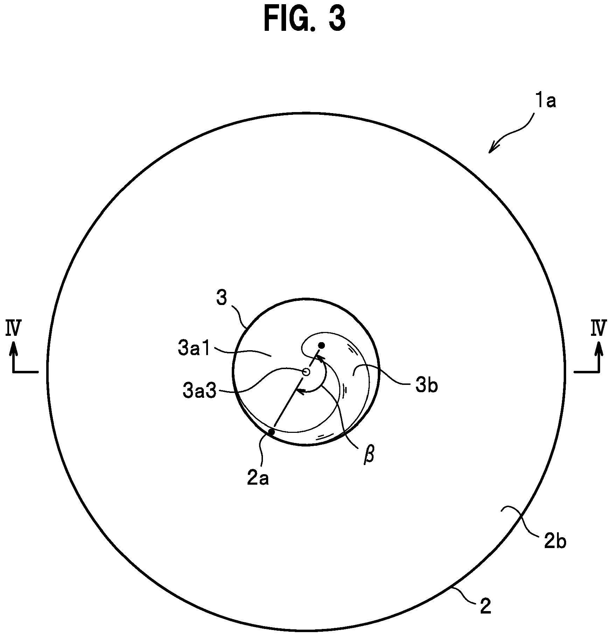

   FIG. 3 is a bottom view of the rivet used in the embodiment of the present invention.
[FIG. 4]

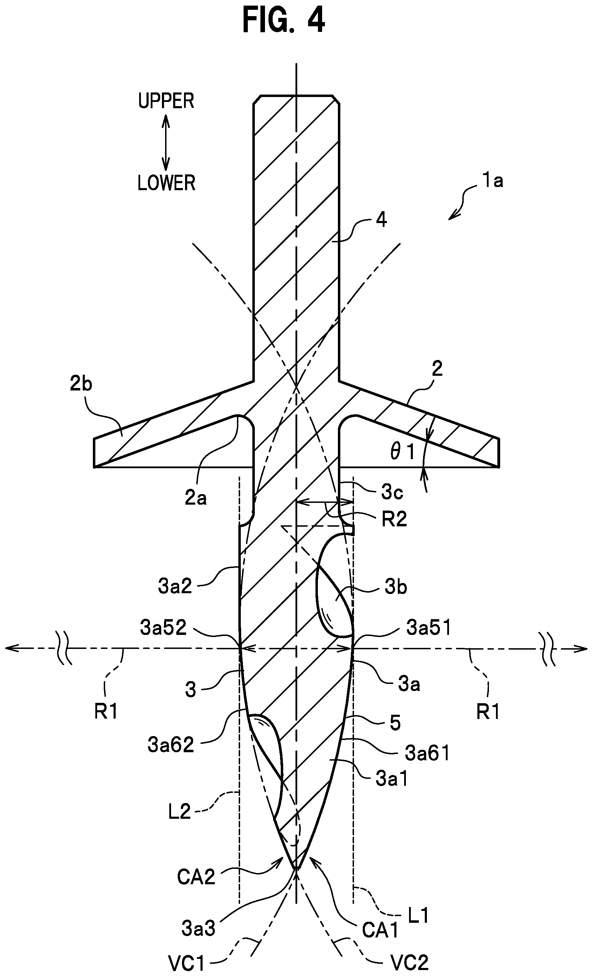

   FIG. 4 is a vertical cross-sectional view corresponding to IV-IV in FIG. 3.
[FIG. 5]

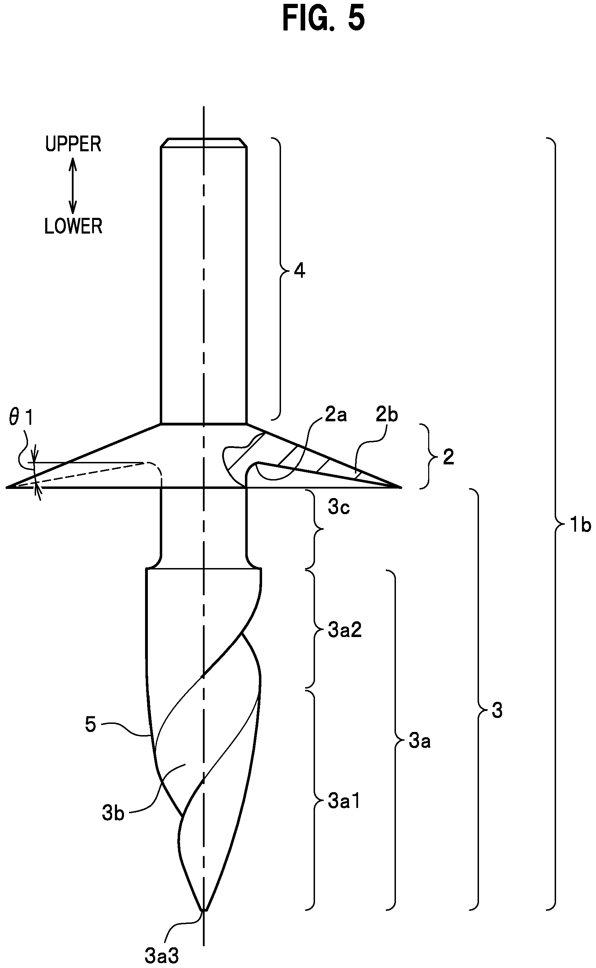

   FIG. 5 is a side view of a rivet of another form used in the embodiment of the present invention.
[FIG. 6]

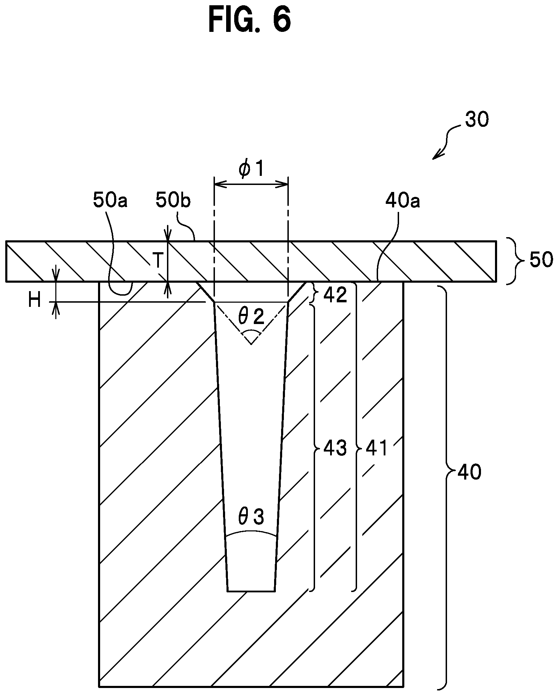

   FIG. 6 is a vertical cross-sectional view of to-be-fastened members used in the embodiment of the present invention.
[FIG. 7]

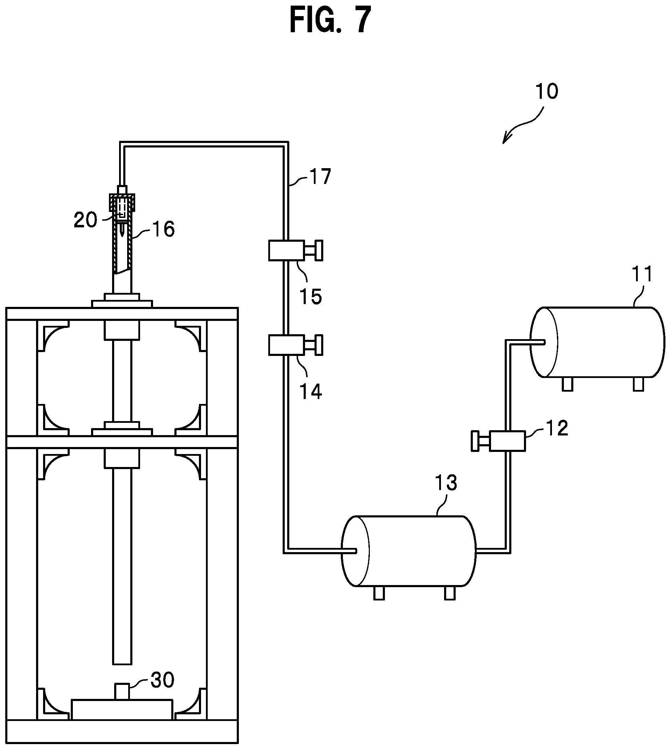

   FIG. 7 is a schematic configuration diagram of a riveting apparatus used in a riveting method according to the embodiment of the present invention.
[FIG. 8]

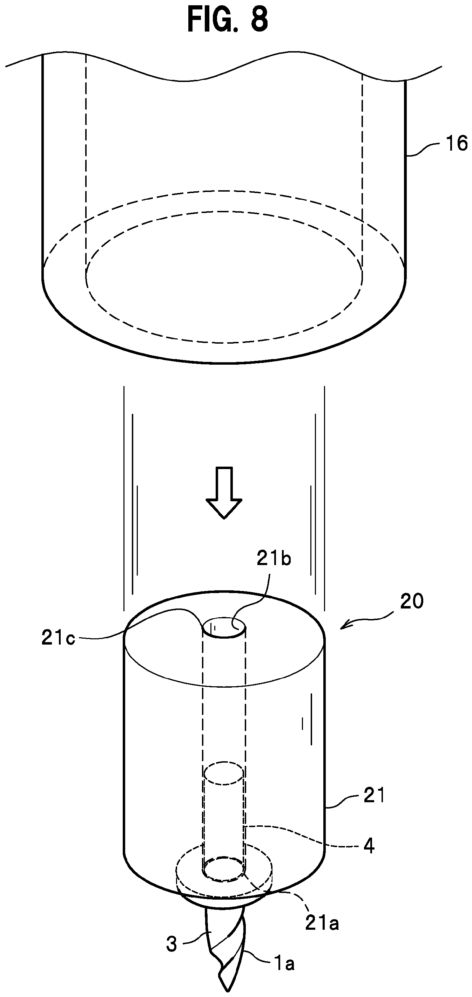

   FIG. 8 is a view showing a state where the rivet is ejected from the riveting apparatus.
[FIG. 9]

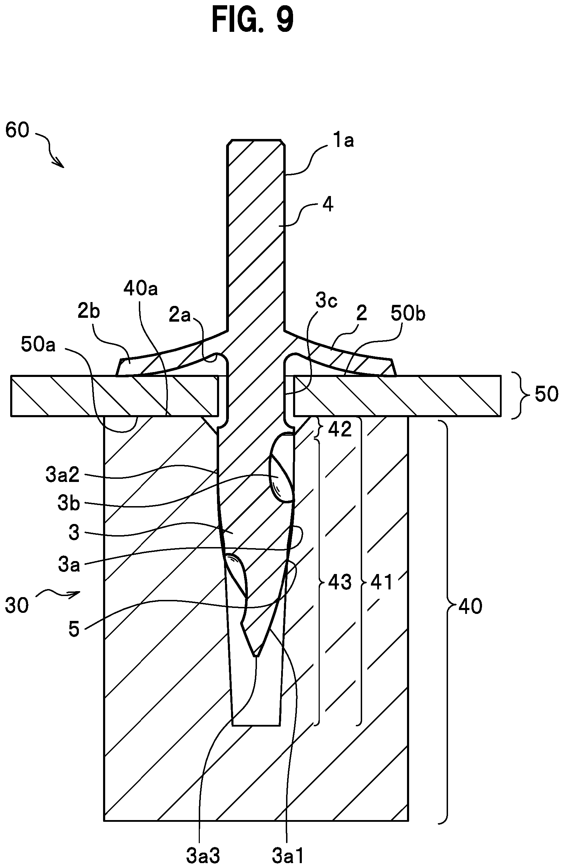

   FIG. 9 is a vertical cross-sectional view of a fastened product according to the embodiment of the present invention.
[FIG. 10A]

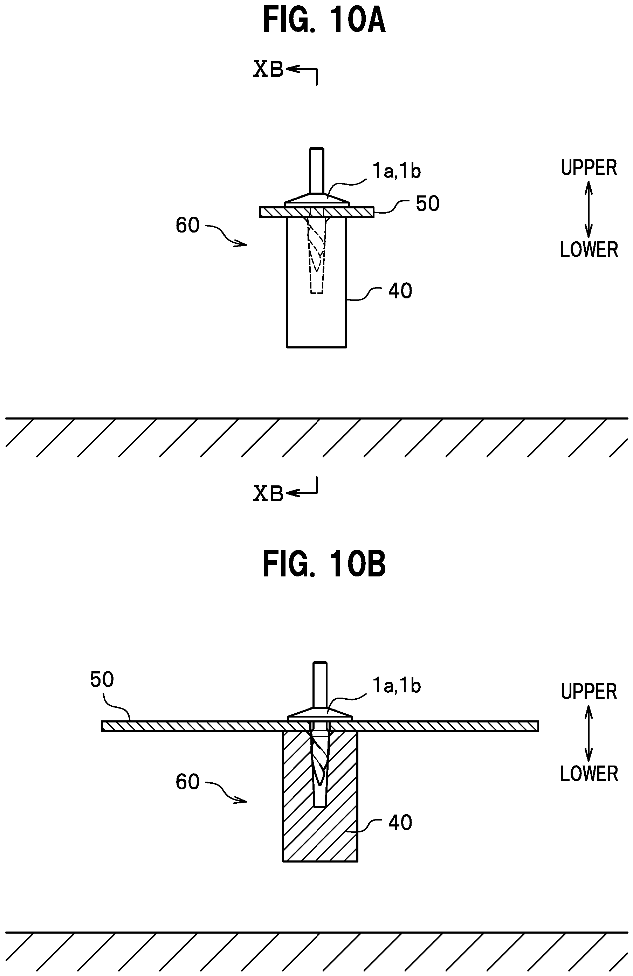

   FIG. 10A is a schematic diagram of a pull-out force measuring method in a test of examples.
[FIG. 10B]
   FIG. 10B is a vertical cross-sectional view corresponding to XB-XB in FIG. 10A.
[FIG. 11]

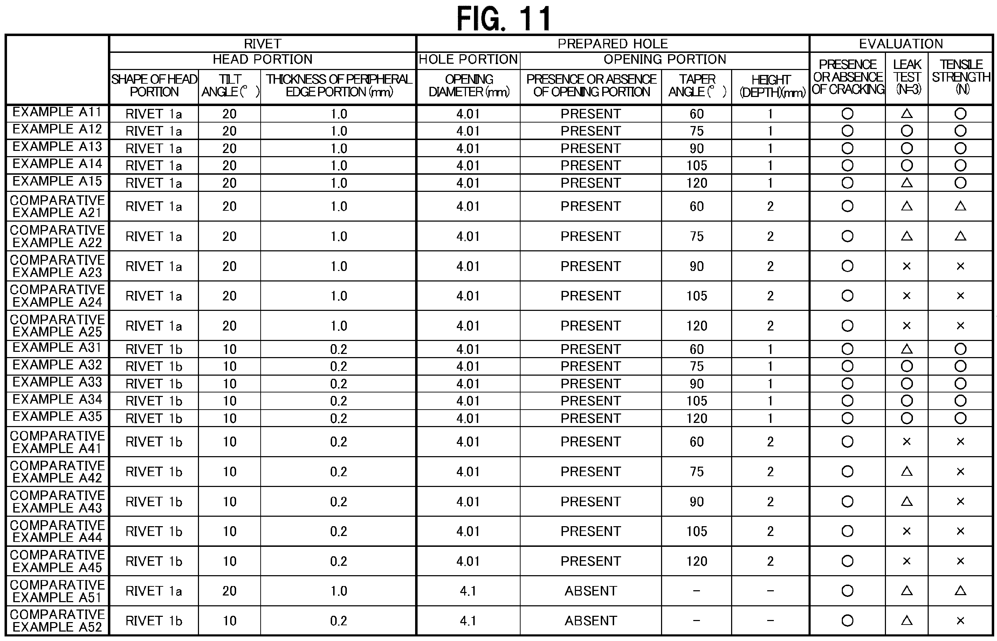

   FIG. 11 is a table showing experiment results of experiment data 1 of the present invention.
[FIG. 12]

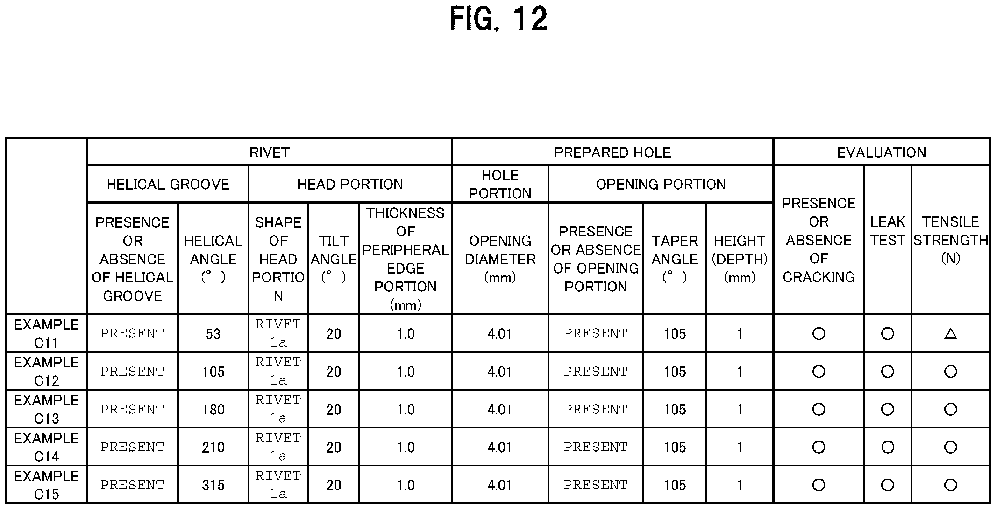

   FIG. 12 is a table showing experiment results of experiment data 2 of the present invention.
[FIG. 13]

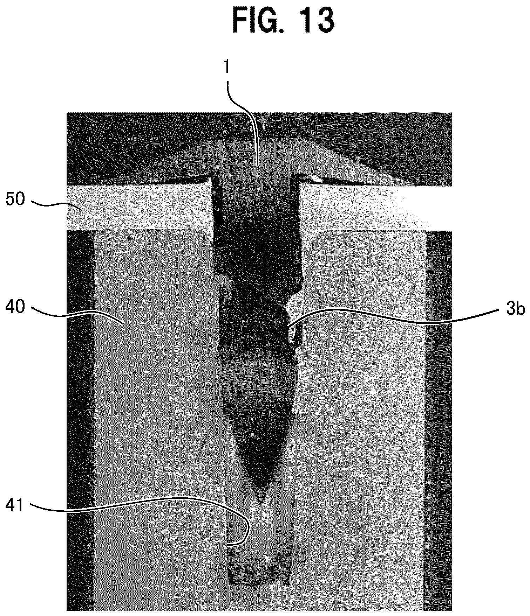

   FIG. 13 is a vertical cross-sectional view of a fastened product according to examples of the present invention.

### DESCRIPTION OF EMBODIMENTS

An embodiment of the present invention is explained with reference to the drawings as appropriate. The present invention is not limited only to the following embodiment. Moreover, all or some of components in the embodiment can be combined as appropriate. Furthermore, the drawings are used for conceptually explaining the present invention, and dimensions and ratios of the components shown in the drawings may vary from actual dimensions and ratios in some cases.

### [Regarding Configuration of Rivet]

A rivet used in the embodiment of the present invention is explained in detail with reference to the drawings.

A rivet 1a shown in FIGS. 1 to 4 is a member that is driven at high speed into two members, which are to be fastened to each other and which are laid one on top of the other, and that fastens these two members together. As shown in FIG. 1, the rivet 1a mainly includes a disc-shaped head portion 2, a first shaft portion 3 provided in a center portion of one side of the head portion 2, and a second shaft portion 4 provided in a center portion of the other side of the head portion 2. The rivet 1a is made of, for example, a metal, and may be made of various materials depending on the materials of the members to be fastened. An upper-lower direction in the following explanation is shown by the arrows in the drawings as appropriate. The upper-lower direction is defined for the sake of convenience of explanation, and does not limit the present invention. Moreover, "front surface" in the present description means a surface on the opposite side to a back surface. Although a case where two members are fastened to each other by using the rivet 1a is explained in this embodiment, the fastening target of the rivet 1a may be three or more members.

The first shaft portion 3 shown in FIG. 1 is a portion that penetrates the members to be fastened. The first shaft portion 3 includes a main body portion 3a extending downward from the head portion 2 and a neck portion 3c formed at a base end (connection portion with the head portion 2) of the first shaft portion 3. The main body portion 3a includes a base end portion 3a2 provided on the base end side and a tip end portion 3a1 provided on the tip end side. The main body portion 3a has a substantially bullet shape that is tapered. The base end portion 3a2 has a substantially cylindrical shape, and the diameter φ2 of the base end portion 3a2 is constant.

The tip end portion 3a1 is a portion that is continuous with the base end portion 3a2 and that is tapered toward the tip end (diameter decreases toward the tip end side). The tip end portion 3a1 includes a bulging portion 5 that bulges outward beyond a cone shape 6 (see FIG. 2) formed by a vertex at a tip end 3a3 and an imaginary bottom surface 3a4 (imaginary interface between the base end portion 3a2 and the tip end portion 3a1) assumed to be at a base end of the tip end portion 3a1. The bulging portion 5 is a portion configured to come into contact with an inner wall surface of a prepared hole 41 to be described later, and is a portion where the interference is the maximum interference. Although the tip end 3a3 is a flat surface in the present embodiment, the tip end portion 3a1 as a whole is sharpened toward the tip end 3a3, and this can reduce resistance in the case where the rivet 1a is driven into to-be-fastened members 30. Note that the tip end 3a3 may not be provided with the flat surface and have a sharp shape.

The shapes of the tip end portion 3a1 and the bulging portion 5 are explained with reference to FIGS. 2, 4, and 5. In a cross-sectional view of the main body portion 3a, one side surface portion 3a61 of the tip end portion 3a1 extends from an end 3a51 of one side surface of the base end portion 3a2 on the tip end portion 3a1 side toward the tip end 3a3 side. The diameter of the tip end portion 3a1 decreases as the side surface portion 3a61 extends toward the tip end 3a3 while drawing an arc CA1 that bulges outward while extending toward a center axis. Similarly, the other side surface portion 3a62 of the tip end portion 3a1 extends from an end 3a52 of the other side surface of the base end portion 3a2 on the tip end portion 3a1 side toward the tip end 3a3 side. The diameter of the tip end portion 3a1 decreases as the side surface portion 3a62 extends toward the tip end 3a3 while drawing an arc CA2 that bulges outward while extending toward the center axis. The side surface portions 3a61 and 3a62 of the tip end portion 3a1 extending, respectively, from the end portions 3a51 and 3a52 of the both side surfaces of the base end portion 3a2 merge at the tip end 3a3. The main body portion 3a is a structural body with an outer shape of a rotating body, obtained by rotating the tip end portion 3a1 and the base end portion 3a2, which have such cross-sectional structures.

More specifically, in the cross-sectional view, circles that touch imaginary straight lines L1 and L2, passing the respective side surfaces of the base end portion 3a2, at the ends 3a51 and 3a52 of the side surfaces of the base end portion 3a2 are referred to as imaginary circles VC1 and VC2, respectively. The arcs CA1 and CA2 forming the respective side surface portions 3a61 and 3a62 of the tip end portion 3a1 are part of the imaginary circles VC1 and VC2. The radius, that is the curvature radius R1 of the imaginary circles VC1 and VC2 can be used to express the size of the arcs CA1 and CA2 forming the side surface portions of the tip end portion 3a1. In the present embodiment, the curvature radius R1 of the arcs CA1 and CA2 forming the side surface portions of the tip end portion 3a1 and the bulging portion 5 is 22.27 mm, and the radius R2 of the base end portion 3a2 is 2 mm. In a relationship with the radius R2 of the base end portion 3a2, R1=R2×11.135.

The curvature radius R1 of the arcs CA1 and CA2 is preferably 14 mm or more, more preferably 18 mm or more, even more preferably 20 mm or more, and is preferably 40 mm or less, more preferably 30 mm or less, even more preferably 26 mm or less, particularly preferably 24 mm or less. The relationship between the curvature radius R1 of the arcs CA1 and CA2 forming the tip end portion 3a1 and the bulging portion 5 and the radius R2 of the base end portion 3a2 is preferably R2×5≤R1, more preferably R2×7≤R1, even more preferably, R2×9≤R1, particularly preferably R2×10≤R1. Moreover, the relationship between the curvature radius R1 and the radius R2 is preferably R1≤R2×20, more preferably R1≤R2×15, even more preferably R1≤R2×13, particularly preferably R1≤R2×12. In a relationship in which the curvature radius R1 is equal to or more than the lower limit described above, the length of the tip end portion 3a1 is sufficiently large, and securing of a rivet contact length between the inner wall surface of the prepared hole 41 and the first shaft portion 3 is facilitated. Moreover, in a relationship in which the curvature radius R1 is equal to or less than the upper limit described above, a bulging amount of the bulging portion 5 is sufficiently large, and securing of the maximum interference between the inner wall surface of the prepared hole 41 and the first shaft portion 3 is facilitated. Accordingly, causing the relationships between the curvature radius R1 and the radius R2 to satisfy the above-mentioned relationships can increase a pull-out resistance generated by the contact between the prepared hole 41 and the first shaft portion 3, and improve leak resistance.

A groove is carved on an outer peripheral surface of the first shaft portion 3 from the base end side to the tip end side of the first shaft portion 3. More specifically, the groove carved in the first shaft portion 3 is a helical groove 3b formed in a helical shape on an outer surface of the first shaft portion 3. The helical groove 3b is formed from the tip end portion 3a1 to the base end portion 3a2 of the main body portion 3a. As shown in FIG. 2, the neck portion 3c is formed to have a smaller diameter than the main body portion 3a. Note that no neck portion 3c may be provided in the first shaft portion 3. In this case, the helical groove 3b is preferably formed from the tip end to the base end of the first shaft portion 3. Moreover, the lengths (ratio of the lengths) of the tip end portion 3a1, the base end portion 3a2, and the neck portion 3c may be set as appropriate according to the shape of the prepared hole 41.

The head portion 2 is a member that prevents the rivet 1a from being buried into the members to be fastened in the case where the rivet 1a is driven into the members to be fastened and that suppresses leak. The shape and size of the head portion 2 are not limited to particular shape or size, and the head portion 2 only needs to receive energy (motion energy) generated depending on the drive speed of the rivet 1a by elastically deforming and receiving the energy. In this example, the head portion 2 extends from the base end of the first shaft portion 3. The head portion 2 includes a center portion 2a connected to the first shaft portion 3 and a peripheral edge portion 2b extending outward from the center portion 2a. The diameter of the peripheral edge portion 2b is larger than the diameter of the first shaft portion 3. Although the shape of the head portion 2 is not limited to a particular shape, in the present embodiment, the head portion 2 has an umbrella shape in which the peripheral edge portion 2b spreads while being tilted downward toward the first shaft portion 3 side. Although the head portion 2 has a circular shape in a plan view in the present embodiment, the head portion 2 may have an ellipsoid shape or a polygonal shape in the plan view.

When the helical groove 3b is traced from the base end to the tip end, the helical groove 3b is formed to turn right hand (clockwise) as viewed from above. Note that the helical groove 3b may be formed to turn left hand (counterclockwise) as viewed from above. In the case where the rivet 1a is driven into the members to be fastened, the helical groove 3b has a role of digging into the members to be fastened while causing the rivet 1a to rotate.

In the following explanation, an angle at which the helical groove 3b circles the first shaft portion 3 is expressed as "helical angle β" (FIG. 3). In the case of a helical angle 90°, the helical groove 3b circles the first shaft portion 3 a quarter of a turn, and in the case of a helical angle 720°, the helical groove 3b circles the first shaft portion 3 two turns. FIGS. 1 to 4 show the case of a helical angle 180°, and the helical groove 3b circles the first shaft portion 3 a half a turn. An appropriate value of the helical angle β of the helical groove 3b is described later.

The cross-sectional shape, width, and depth of the helical groove 3b can be set as appropriate within a scope in which the helical groove 3b can perform its role of digging into the members to be fastened. As shown in FIG. 4, the helical groove 3b in this example has a substantially arc shape in a cross-sectional view, and is tapered toward the tip end side (shape that becomes narrower and shallower toward the tip end side). Note that the helical groove 3b may be provided in part of the main body portion 3a. Moreover, multiple helical grooves 3b may be provided in the main body portion 3a.

The second shaft portion 4 extends from the center portion 2a of the head portion 2 in the opposite direction to the first shaft portion 3, and is a portion having, for example, a substantially cylindrical shape.

FIG. 5 shows a rivet 1b that is a modified example of the rivet 1a described above. The rivet 1b is different from the rivet 1a in the following point. The thickness of the peripheral edge portion 2b of the head portion 2 in the rivet 1a is substantially constant, while the thickness of the peripheral edge portion 2b in the rivet 1b has a tapered shape as shown in FIG. 5 in which part of the head portion 2 is cut away. Other configurations are the same as those of the rivet 1a described above, and detailed explanation is omitted by denoting the configurations in FIG. 5 with the same reference signs as those in FIGS. 1 to 4.

### [Regarding To-be-fastened Members]

The to-be-fastened members 30 shown in FIG. 6 are members to be fastened to each other by the rivet 1a or the rivet 1b described above. The to-be-fastened members 30 include a first to-be-fastened member 40 and a second to-be-fastened member 50. Specifically, the first to-be-fastened member 40 and the second to-be-fastened member 50 are fastened to each other by driving the rivet 1a or the rivet 1b therein. The first to-be-fastened member 40 and the second to-be-fastened member 50 are fastened to each other with the rivet 1a or the rivet 1b in a state where a back surface 50a of the second to-be-fastened member 50 is laid on a front surface 40a of the first to-be-fastened member 40 having the prepared hole 41.

In the present embodiment, the first to-be-fastened member 40 is a block material with a quadrilateral prism shape. The shape of the first to-be-fastened member 40 is not limited to a particular shape as long as the first to-be-fastened member 40 is a member that has a thickness large enough to provide at least the prepared hole 41 to be described later, and may be another shape. For example, the first to-be-fastened member 40 is a column-shaped member having a cross section with a circular, elliptical, polygonal, or indefinite shape. The length of the first to-be-fastened member 40 is preferably larger than the length of the first shaft portion 3 in a direction in which the rivet 1a or 1b is inserted. Moreover, the first to-be-fastened member 40 may be a member made to have a large thickness by laying two or more plate members one on top of another.

The prepared hole 41 includes an opening portion 42 opened on the front surface 40a of the first to-be-fastened member 40 and a hole portion 43 continuous with the opening portion 42. The hole portion 43 includes an inner wall surface with a substantially cone shape or a substantially truncated cone shape that is a tapered shape. The opening portion 42 is formed in a substantially cone shape whose inner wall surface forms a taper angle θ2 and whose diameter decreases from the front surface 40a side toward an inner portion of the first to-be-fastened member 40. The hole portion 43 is formed in a substantially cone shape or a substantially truncated cone shape whose inner wall surface forms a taper angle θ3 and whose diameter decreases from the front surface 40a side toward the inner portion of the first to-be-fastened member 40. The depth of the hole portion 43 is larger than the length of the first shaft portion 3 described above. The opening diameter φ1 of the hole portion 43 is larger than the diameter φ2 (FIG. 2) of the base end portion 3a2 of the first shaft portion 3. Moreover, the depth of the prepared hole 41 may be the same as the length of the first shaft portion 3 or smaller than the length of the first shaft portion 3. In the case where the depth of the prepared hole 41 is larger than the length of the first shaft portion 3, the rivet 1a can be smoothly inserted. In the case where the depth of the prepared hole 41 is smaller than the length of the first shaft portion 3, the tip end of the first shaft portion 3 is driven into a bottom portion of the prepared hole 41, and the joint strength increases. However, the depth and the length are preferably set to such depth and length that insertion is not hindered. The prepared hole 41 may be formed to be provided in formation of the first to-be-fastened member 40, or may be formed by performing tapered hole opening processing on the first to-be-fastened member 40 with a tool such as a drill, a reamer, or an end mill.

In the present embodiment, the second to-be-fastened member 50 is a plate member with a flat plate shape. The second to-be-fastened member 50 may have any shape or the like as long as the second to-be-fastened member 50 has such a thickness that at least the first shaft portion 3 can penetrate the second to-be-fastened member 50, and is, for example, a plate-shaped member that has a thickness smaller than the length of the first shaft portion 3. The material of the first to-be-fastened member 40 and the second to-be-fastened member 50 is not limited to a particular material, and is made of a metal that can be fastened with the rivet 1a (for example, aluminum, an aluminum alloy, magnesium, a magnesium alloy, copper, a copper alloy, titanium, a titanium alloy, or the like). The first to-be-fastened member 40 may be, for example, a casted member. In this case, it is desirable that the prepared hole 41 is also formed in a formation step of the first to-be-fastened member 40 by casting. The second to-be-fastened member 50 may be, for example, a plate member made of a metal or a resin. Note that the casted member is a material assumed to be obtained by putting a metal heated and melted to a liquid form referred to as molten metal into a die and cooling and solidifying the molten metal. Moreover, in this case, the casted member is preferably (a casted member made of) an Al-Si-Cu-based alloy, more preferably JISH5302 ADC12.

### [Regarding Riveting Method]

A riveting method using the rivet 1a or 1b according to the embodiment of the present invention is explained in detail with reference to the drawings. A riveting apparatus 10 shown in FIG. 7 is an apparatus that drives the rivet 1a (or rivet 1b (same applies hereinafter)) at high speed into the two members (to-be-fastened members 30) that are to be fastened to each other and that are laid one on top of the other, and fastens the to-be-fastened members 30 together.

As shown in FIG. 7, the riveting apparatus 10 includes an air compressor 11, a first needle valve 12, a pressure booster 13, a second needle valve 14, a solenoid valve 15, a rivet ejector 16, and hoses 17 connecting these configurations to one another.

The air compressor 11 is a device that compresses and sends out air. The first needle valve 12 is a valve for the pressure booster 13. The pressure booster 13 is a device that increases the pressure of the air sent out from the air compressor 11. The second needle valve 14 and the solenoid valve 15 are adjustment valves for sending the compressed air to the rivet ejector 16.

The riveting method of the present embodiment includes a preparation step of laying the back surface 50a of the second to-be-fastened member 50 on the front surface 40a of the first to-be-fastened member 40 having the prepared hole 41 (setting the second to-be-fastened member 50 and the first to-be-fastened member 40 to the state of FIG. 6) and a riveting step of moving the metal rivet 1a set at a position away from a front surface 50b (FIG. 6) of the second to-be-fastened member 50 toward a position of the prepared hole 41 by using the riveting apparatus 10 and driving the rivet 1a into the second to-be-fastened member 50 and the first to-be-fastened member 40 in this order to cause the rivet 1a to reach the inside of the prepared hole 41.

Specifically, the rivet ejector 16 has a long cylindrical shape in this example, and ejects a bullet 20 housed inside the rivet ejector 16 toward the to-be-fastened members 30 by using the pressure of the compressed air (air pressure). The bullet 20 only needs to be configured to include the rivet 1a, and may be only the rivet 1a. In this example, as shown in FIG. 8, an object in which an auxiliary member 21 is attached to the rivet 1a is used as the bullet 20. The auxiliary member 21 is a member for driving the rivet 1a into the to-be-fastened members 30 in a stable state. Moreover, the auxiliary member 21 is a member that increases motion energy of the rivet 1a ejected together with the auxiliary member 21. For example, in the case where the rivet 1a is light weight, the auxiliary member 21 is used for weight adjustment.

The material, shape, and mass of the auxiliary member 21 may be any material, shape, and mass as long as the rivet 1a is driven into the to-be-fastened members 30 in the stable state, and can be set as appropriate. As shown in FIG. 8, the auxiliary member 21 in this example has a cylindrical shape in which an inner peripheral surface 21b with a substantially circular column shape is formed, and the second shaft portion 4 is inserted into the inner peripheral surface 21b from one opening portion 21a to fix the rivet 1a to the auxiliary member 21. Specifically, the inner peripheral surface 21b holds the second shaft portion 4 as a holding portion. The compressed air is taken in from the other opening portion 21c, and the bullet 20 is ejected from the rivet ejector 16 at high speed by using the pressure of the taken-in air. Note that the bullet 20 in the rivet ejector 16 is arranged such that the center axis of the first shaft portion 3 of the rivet 1a attached to the bullet 20 is aligned in advance with the center axis of the prepared hole 41 of the to-be-fastened members 30 located below the first shaft portion 3. Moreover, the rivet 1a may be fixed to the auxiliary member 21 in a form in which the rivet 1a is provided with no second shaft portion 4.

The bullet 20 ejected from the rivet ejector 16 moves in air at high speed in a non-rotating state, and reaches the to-be-fastened members 30. The rivet 1a having reached the to-be-fastened members 30 is driven into the to-be-fastened members 30 while being rotated and screwed-in by the helical groove 3b carved in the first shaft portion 3 (see FIG. 1). Then, the entire first shaft portion 3 is inserted into the to-be-fastened members 30, the head portion 2 (see FIG. 1) comes into contact with the to-be-fastened members 30, and the riveting is thereby completed. The to-be-fastened members 30 including the two members are thereby fastened together. As a result, the to-be-fastened members 30 are fastened to each other with the rivet 1a, and become a fastened product 60 as shown in the cross-sectional diagram of FIG. 9.

### [Regarding Numerical Ranges]

Next, explanation is given of numerical ranges of the portions preferable for the riveting method according to the present embodiment.

First, the height (depth) H (FIG. 6) of the opening portion 42 normally has a relationship of "0.25×T<H<0.75×T" with respect to the thickness T (FIG. 6) of the second to-be-fastened member 50 at the driving position of the rivet 1a or 1b. The relationship between the height H of the opening portion 42 and the thickness T of the second to-be-fastened member 50 is preferably a relationship of 0.3×T<H, more preferably 0.35×T<H, even more preferably 0.4×T<H, particularly preferably 0.45×T<H. Moreover, the relationship between the height H of the opening portion 42 and the thickness T of the second to-be-fastened member 50 is preferably a relationship of H<0.7×T, more preferably H<0.65×T, even more preferably H<0.6×T, particularly preferably H<0.55×T. Operations and effects provided by the relationship in which the height H of the opening portion 42 is larger than the above-mentioned lower limit with respect to the thickness T of the second to-be-fastened member 50 and operations and effects provided by the relationship in which the height H of the opening portion 42 is smaller than the above-mentioned upper limit with respect to the thickness T of the second to-be-fastened member 50 are described later.

Moreover, the taper angle θ2 (FIG. 6) of the opening portion 42 in the prepared hole 41 is preferably 70 to 110°, more preferably 75 to 105°, even more preferably 80 to 100°, particularly preferably 85 to 95°. Operations and effects provided by setting the taper angle θ2 of the opening portion 42 equal to or more than the lower limit value described above and operations and effects provided by setting the taper angle θ2 of the opening portion 42 equal to or less than the upper limit value described above are described later.

Moreover, a relationship between the opening diameter φ1 (FIG. 6) that is the diameter of an entrance portion of the hole portion 43 in the prepared hole 41 and the diameter φ2 (FIG. 2) of the base end portion 3a2 of the main body portion 3a is preferably 1.0×φ2<φ1≤1.1×φ2, more preferably 1.01×φ2<φ1≤1.09×φ2, even more preferably 1.02×φ2<φ1≤1.08×φ2.

Furthermore, the taper angle θ3 (FIG. 6) that is a tilt of the inner wall surface of the hole portion 43 in the prepared hole 41 is preferably 2 to 10°, more preferably 3 to 9°, even more preferably 4 to 8°.

Moreover, the thickness of the peripheral edge portion 2b of the head portion 2 in the rivet 1a or the rivet 1b (see FIGS. 4 and 5. A portion with the largest thickness for the rivet 1b) is preferably 0.2 to 2.0 mm, more preferably 0.3 to 1.8 mm, even more preferably 0.5 to 1.5 mm.

Furthermore, as shown in FIG. 4, a tilt angle θ1 of the head portion 2 in the rivet 1a is angle between an imaginary plane perpendicular to the axis center of the rivet 1a and a lower surface of the peripheral edge portion 2b. Moreover, as shown in FIG. 5, the tilt angle θ1 of the head portion 2 in the rivet 1b is an angle between an imaginary plane perpendicular to the axis center of the rivet 1b and a lower surface of the peripheral edge portion 2b. In the case where the tilt angles of an upper surface and the lower surface of the peripheral edge portion 2b vary from each other as in the rivet 1b, the tilt angle of the lower surface is adopted. This is because the lower surface side is assumed to contribute to the leak resistance. The tilt angle θ1 is preferably 5 to 30°, more preferably 10 to 25°, even more preferably 15 to 20°.

Moreover, the helical angle β (see FIG. 3. As described above) is preferably 60° or more, more preferably 120° or more, even more preferably 180° or more, particularly preferably 240° or more. Furthermore, the helical angle β is preferably 360° or less, more preferably 330° or less, even more preferably 300° or less. In the case where the helical angle β is equal to or larger than the lower limit value described above, tensile strength exhibited by entering of the first to-be-fastened member 40 and the second to-be-fastened member 50 into the helical groove 3b of the rivet 1a, 1b and meshing of the first to-be-fastened member 40 and the second to-be-fastened member 50 with the helical groove 3b tends to be improved. Moreover, in the case where the helical angle β is equal to or less than the upper limit value described above, the rivet 1a or 1b tends to be driven into the first to-be-fastened member 40 and the second to-be-fastened member 50 while being smoothly rotated by being affected by the helical groove 3b in the driving of the rivet 1a or 1b.

### [Regarding Operations and Effects]

Operations and effects of the embodiment and the examples explained above are explained.

A method of fastening two plate members by using a rivet in which a helical groove is carved has been conventionally known (Patent Literature 1 described above). In this background art, the rivet is screwed while being rotated, and this causes the two metal plates to enter and mesh with the helical groove of the rivet. Accordingly, the fastening force is increased. To be more specific, to-be-fastened members including an upper plate and a lower plate into which the rivet is driven are deformed such that a protrusion with a shape of a volcanic crater protruding in a direction of driving is formed, and the to-be-fastened members cut by the helical groove is wound around a shaft portion along the helical groove.

As described above, in the background art, the case of fastening the plate members is assumed, and the case where the lower to-be-fastened member is a block-shaped block member or the like is not assumed. Accordingly, in the case where the plate member or the like and the block member or the like are attempted to be fastened to each other by using the rivet in which the groove is carved, leak from the fastened product after the fastening sometimes occurs. This is due to the following reason. In the case where the rivet is driven into the to-be-fastened members that are in the state where the plate member or the like is laid on the block member or the like, the upper to-be-fastened member (plate member or the like) is deformed in a driving direction. Moreover, the block member or the like on the lower side is cut by the groove, and deformation occurs in the block member or the like around the rivet. Specifically, there is no space where parts formed by the deformation of both to-be-fastened members can escape between the upper to-be-fastened member and the block or the like that is the lower to-be-fastened member. Accordingly, the upper to-be-fastened member is deformed as if to be raised upward with the driving of the rivet, and a space is formed between both to-be-fastened members, thereby causing leak.

In the present embodiment, the rivet 1a or 1b is moved to the position of the prepared hole 41 in the state where the back surface 50a of the second to-be-fastened member 50 is laid on the front surface 40a of the first to-be-fastened member 40 having the prepared hole 41, and is driven into the second to-be-fastened member 50 and the first to-be-fastened member 40 in this order. Furthermore, the prepared hole 41 includes the hole portion 43 having the inner wall surface with the substantially cone shape or the substantially truncated cone shape that is the tapered shape and the opening portion 42 that expands and opens in the tapered shape from the hole portion 43. The height (depth) H of the opening portion 42 is in the relationship of "0.25×T<H<0.75×T" with respect to the thickness T of the second to-be-fastened member 50 at the driving position of the rivet 1a or 1b.

Thus, according to the present embodiment, driving the rivet 1a or 1b into the second to-be-fastened member 50 causes the second to-be-fastened member 50 into which the rivet 1a or 1b is driven to be deformed such that the protrusion with the volcanic crater shape protruding toward the first to-be-fastened member 40 is formed. Moreover, driving of the rivet 1a or 1b into the first to-be-fastened member 40 causes the groove to cut a part of the inner wall surface of the prepared hole 41 in the first to-be-fastened member 40 into which the rivet 1a or 1b is driven, and the cut part of the inner wall surface of the prepared hole 41 is partially taken into the groove. Furthermore, since the opening portion 42 is provided on the front surface 40a of the first to-be-fastened member 40 in the state where the back surface 50a of the second to-be-fastened member 50 is laid on the front surface 40a of the first to-be-fastened member 40, a space in the opening portion 42 surrounded by the opening portion 42 of the first to-be-fastened member 40 and the back surface 50a of the second to-be-fastened member 50 is filled with the cut part of the first to-be-fastened member 40 and the part of the second to-be-fastened member 50 deformed in the protruding shape that is the volcanic crater shape. In this case, setting the height H and the thickness T to satisfy the relationship of "0.25×T<H" allows securing of a sufficient space for housing the parts formed by the deformation of the to-be-fastened members 30 in the space in the opening portion 42. Accordingly, it is possible to prevent the case where the second to-be-fastened member 50 is raised by contact with the parts formed by the deformation of the to-be-fastened members 30 and the space between the first to-be-fastened member 40 and the second to-be-fastened member 50 is expanded, and the leak resistance can be improved. Moreover, setting the height H and the thickness T to satisfy the relationship of "H<0.75×T" causes the to-be-fastened members 30 to be fastened to each other in a state where the space in the opening portion 42 is filled with the parts formed by the deformation of the to-be-fastened members 30. This can improve the leak resistance. Moreover, setting the height H and the thickness T to satisfy the relationship of "H<0.75×T" can prevent the case where: an excessive gap is left in the opening portion 42 between the first to-be-fastened member 40 and the second to-be-fastened member 50 in filling of the space in the opening portion 42 with the parts formed by the deformation of the to-be-fastened members 30; the second to-be-fastened member 50 becomes more likely to be deformed in application of load to the to-be-fastened members 30 after the fastening thereof; and the joint strength is thereby reduced. In other words, setting the height H and the thickness T to satisfy the relationship of "H<0.75×T" allows the first to-be-fastened member 40 to support the second to-be-fastened member 50 laid on the first to-be-fastened member 40 via the parts that fill the inside of the opening portion 42 and that are formed by the deformation of the to-be-fastened members 30. Accordingly, the deformation of the second to-be-fastened member 50 in the case where load is applied after the fastening is suppressed, and the joint strength can be improved.

As described above, according to the present embodiment, filling the insides of the opening portion 42 and the helical groove 3b with the parts formed by the contact of the first to-be-fastened member 40 and the second to-be-fastened member 50 with the rivet 1a or 1b in the driving of the rivet 1a or 1b allows the rivet 1a or 1b to come into tight contact with the first to-be-fastened member 40 and the second to-be-fastened member 50, and can provide the manufacturing method of the fastened product and the fastened product 60 that are improved in leak resistance and that have sufficient joint strength.

Moreover, providing the groove in the first shaft portion 3 can cause the groove to cut the material of the first to-be-fastened member 40 in the driving of the rivet 1a or 1b. In a case of a screw, provision of a thread increases the circumferential length of the screw depending on the height of the thread. In the present embodiment, the circumferential length of the first shaft portion 3 does not change even in the case where the groove is provided on the outer peripheral surface of the first shaft portion 3. Accordingly, deformation of the first to-be-fastened member 40 to a periphery that occurs in the driving of the rivet 1a or 1b can be suppressed. Moreover, part of the material cut by the driving of the rivet 1a or 1b is taken into the groove, and this can reduce stress generated with the deformation of the first to-be-fastened member 40. Accordingly, it is possible to insert the rivet 1a or 1b into the prepared hole 41 and fasten the to-be-fastened members 30 to each other while suppressing occurrence of cracking in the first to-be-fastened member 40. Moreover, accuracy as high as that for the case of the self-tapping fastening using the self-tapping screw is not required for the shape of the prepared hole 41 provided in the aluminum alloy casted object, and the case where the die for the to-be-fastened members 30 has a short life can be suppressed.

Moreover, the taper angle θ2 of the opening portion 42 is 70 to 110°. This can improve the leak resistance. Setting the taper angle θ2 of the opening portion 42 equal to or more than the lower limit value enables securing of a space sufficient for housing the parts formed by the deformation of the to-be-fastened members 30 in the space of the opening portion 42. Accordingly, the leak resistance can be improved. Moreover, setting the taper angle θ2 of the opening portion 42 equal to or less than the upper limit value causes the to-be-fastened members 30 to be fastened in the state where the space of the opening portion 42 is filled with the parts formed by the deformation of the to-be-fastened members 30, and allows the second to-be-fastened member 50 laid on the first to-be-fastened member 40 to be supported. Accordingly, it is possible to improve the leak resistance and improve the joint strength.

The opening diameter φ1 of the hole portion 43 of the prepared hole 41 is larger than the diameter φ2 of the base end portion 3a2 of the first shaft portion 3. This suppresses an increase of load between the opening portion 42 of the prepared hole 41 and the first shaft portion 3 of the rivet 1a or 1b in the driving of the rivet 1a or 1b, and the first shaft portion 3 can be smoothly inserted into the prepared hole 41.

Moreover, the relationship between the opening diameter φ1 of the hole portion 43 and the diameter φ2 of the base end portion 3a2 of the first shaft portion 3 is preferably 1.0×φ2<φ1≤1.1×φ2. This suppresses an increase of load between the opening portion 42 of the prepared hole 41 and the first shaft portion 3 of the rivet 1a or 1b in the driving of the rivet 1a or 1b, and allows the first shaft portion 3 to be smoothly inserted into the prepared hole 41.

Furthermore, the taper angle θ3 of the hole portion 43 is preferably 2 to 10°. The inner wall surface of the hole portion 43 formed in the tapered shape and the tip end portion 3a1 whose diameter decreases toward the tip end side thereby come into contact with each other. This causes the to-be-fastened members 30 to be deformed, and enables fastening with the rivet 1a or 1b.

Moreover, the rivet 1a or 1b further includes the head portion 2 including the center portion 2a and the peripheral edge portion 2b, and the diameter of the peripheral edge portion 2b of the head portion 2 is larger than the diameter of the first shaft portion 3. The head portion 2 thereby elastically deforms and comes into tight contact with the surface of the to-be-fastened members 30, and this can further improve the leak resistance of the fastened product 60. Specifically, the head portion 2 is a portion where the rivet 1a or 1b strongly comes into tight contact with the surface of the to-be-fastened members 30 in the case where the rivet 1a or 1b is driven into the to-be-fastened members 30. The head portion 2 elastically deforms by receiving energy (motion energy) generated by the driving of the rivet 1a or 1b, and is held by strongly coming into tight contact with the surface of the to-be-fastened members 30, and this supports airtightness. Moreover, since the rivet 1a or 1b is fastened to the to-be-fastened members 30, the head portion 2 is held while being elastically deformed. Moreover, the peripheral edge portion 2b of the head portion 2 also functions as a stopper in the driving of the rivet 1a or 1b, and can absorb motion energy.

Furthermore, since the head portion 2 has the umbrella shape in which the peripheral edge portion 2b spreads while being tilted toward the first shaft portion 3 side, the leak resistance of the fastened product 60 can be further improved.

Moreover, since the thickness of the peripheral edge portion 2b of the head portion 2 is in the numerical range of 0.1 to 2.0 mm, the leak resistance of the fastened product 60 can be further improved.

Furthermore, since the tilt angle θ1 of the head portion 2 is in the numerical range of 5 to 30°, the leak resistance of the fastened product 60 can be further improved.

Moreover, the groove carved in the first shaft portion 3 is the helical groove 3b formed in the helical shape on the outer surface of the first shaft portion 3, and in the riveting step, the rivet 1a or 1b set at the position away from the front surface 50b of the second to-be-fastened member 50 is moved toward the position of the prepared hole 41 a non-rotating state, and is made to reach the inside of the prepared hole 41 by being rotated and screwed into the second to-be-fastened member 50 and the first to-be-fastened member 40 in this order. Accordingly, the helical groove 3b can be made to cut the surface material of the to-be-fastened members 30 and fill the prepared hole 41 by the rotation of the rivet 1a or 1b. Moreover, the helical groove 3b can hold therein the material of the first to-be-fastened member 40 and the second to-be-fastened member 50 cut by the helical groove 3b, and suppress entrance of extra material into a space between the rivet 1a or 1b and the prepared hole 41. Accordingly, deformation due to bulging of the first to-be-fastened member 40 that occurs depending on the volume of the rivet 1a or 1b interfering with the first to-be-fastened member 40 and the second to-be-fastened member 50 with the driving of the rivet 1a or 1b is suppressed, and cracking in the first to-be-fastened member 40 is more likely to be suppressed. In the case where the first to-be-fastened member 40 is an aluminum alloy casted object with a low stretch property, suppression of cracking by the helical groove 3b is further effective.

Moreover, in the riveting step, the auxiliary member 21 including the holding portion (inner peripheral surface 21b) configured to hold the second shaft portion 4 is used, and the rivet 1a or 1b is moved toward the position of the prepared hole 41 together with the auxiliary member 21 in the state where the second shaft portion 4 is held by the auxiliary member 21. Accordingly, increasing the weight of the rivet 1a or 1b with the auxiliary member 21 can increase motion energy in the driving of the rivet 1a or 1b. Thus, the rivet 1a or 1b can be more efficiently driven by using the auxiliary member 21.

Moreover, in the case where the first to-be-fastened member 40 is a casted member, the prepared hole 41 can be formed in advance in the casting stage. Accordingly, it is possible to omit the step of forming the prepared hole 41 in the first to-be-fastened member 40 by drilling and improve productivity.

### <Others>

Although the embodiment of the present invention has been described above, appropriate design changes can be made within a scope not contradicting with the spirit of the present invention.

Although the rivet 1a or 1b is ejected toward the to-be-fastened members 30 by using air pressure in the present embodiment, the rivet 1a or 1b may be driven into the to-be-fastened members 30 by using other methods. For example, pressure may be applied to the rivet 1a or 1b by using a substance other than air, or the rivet 1a or 1b may be driven into the to-be-fastened members 30 by a mechanical action (for example, reciprocating motion of a piston).

### Examples

Next, examples of the present invention are explained. In the present example, tests of experiment data 1 and experiment data 2 were preformed to grasp the characteristics of the rivet 1a and the rivet 1b according to the present invention.

In the experiment data 1 and the experiment data 2, for each of multiple examples and multiple comparative examples corresponding to the examples, the rivet 1a or the rivet 1b was driven into the to-be-fastened members 30 under various conditions by using the riveting apparatus 10 described above to create the fastened product 60 (FIG. 9) in which the to-be-fastened members 30 were fastened together by the rivet 1a or the rivet 1b, and various evaluations were performed for the fastened product 60 (FIGS. 11 to 12).

### [Evaluation]

### <Presence or Absence of Cracking>

Presence or Absence of cracking in the fastened product 60 was visually checked. A case where cracking occurred in the fastened product 60 was evaluated as "×" to indicate "not good", and a case where no cracking occurred was evaluated as "∘" to indicate "good".

### <Leak Test>

A resin jig was arranged on the front surface 50b side of the second to-be-fastened member 50 in the fastened product 60 to cover the entire head portion 2 and the second shaft portion 4. After the arrangement of the resin jig, pressure was applied to the resin jig toward the second to-be-fastened member 50 to set the resin jig and the fastened product 60 to a state where no air leaks from a gap between the resin jig and the second to-be-fastened member 50, and a test sample was thus prepared. Air was blown into the resin jig from the front surface 50b side at a pressure of 0.3 MPa with the test sample submerged in water to perform pressurization. Generation of air bubbles from a joining surface of the first to-be-fastened member 40 and the second to-be-fastened member 50 was checked to evaluate presence or absence of leak. A case where no air bubbles were generated for one minute was evaluated as "good", a case where the numbers of air bubbles generated in one minute was five or less was evaluated as "acceptable", and a case where the number of air bubbles generated in one minute was six or more was evaluated as "not acceptable". The leak test was performed for three to-be-fastened products, and a case where all three to-be-fastened products were good was evaluated as "o" to indicate "good", a case where at least one of the three to-be-fastened products was good but the others were acceptable or not acceptable was evaluated as "△" to indicate "conditional", and a case where all three to-be-fastened products were acceptable or not acceptable was evaluated as "×" to indicate "not good".

### <Tensile Strength>

As shown in FIGS. 10A and 10B, the first to-be-fastened member 40 in the fastened product 60 was arranged on the lower side while the second to-be-fastened member 50 was arranged on the upper side, and the lower end side of the second to-be-fastened member 50 was fixed with a predetermined jig (illustration omitted). In this state, force pulling the first to-be-fastened member 40 upward was applied to both ends of the first to-be-fastened member 40 by using a tensile tester (manufactured by Shimadzu Corporation, Autograph, AG-50kNX) to perform a pull-out test. Cross head speed of the tensile tester was set to 3 mm/min. In the pull-out test, load up to a point where the rivet 1a, 1b and the second to-be-fastened member 50 were pulled out from the first to-be-fastened member 40 was measured, and a numerical value indicating the maximum load was used as tensile strength of the fastened product 60. As a result, a case where the tensile strength of the fastened product 60 exceeded 2,500 N was evaluated as "o" to indicate "good", a case where the tensile strength was 2,000 to 2,500 N was evaluated as "△" to indicate "conditional", and a case where the tensile strength was less than 2,000 N was evaluated as "×" to indicate "not good".

### [Experiment Data 1]

In the experiment data 1, as explained with reference to FIG. 6, the back surface 50a of the plate-shaped second to-be-fastened member 50 was laid on the front surface 40a of the quadrilateral-prism-shaped first to-be-fastened member 40 having the prepared hole 41. In this state, as explained with reference to FIGS. 7 and 8, the rivet 1a, 1b attached to the auxiliary member 21 was driven into the second to-be-fastened member 50 and the first to-be-fastened member 40 in this order by using the riveting apparatus 10, and was made to reach the inside of the prepared hole 41. The fastened product 60 in which the first to-be-fastened member 40 and the second to-be-fastened member 50 are fastened to each other with the rivet 1a was thereby obtained.

In each of the examples and the comparative examples in the experiment data 1, the rivet 1a or the rivet 1b explained with reference to FIGS. 1 to 5 was used. In the rivet 1a, 1b, the length of the tip end portion 3a1 of the main body portion 3a was 9 mm, and the diameter φ2 of the base portion of the tip end portion 3a1 was 4 mm. Moreover, the curvature radius R1 of the arc forming the tip end portion 3a1 and the bulging portion 5 of the first shaft portion 3 in the side cross-sectional view was 22.5 (mm). Furthermore, the length of the base end portion 3a2 of the main body portion 3a was 3 mm, the diameter φ2 of the base end portion 3a2 was 4 mm, and the radius R2 of the base end portion 3a2 was 2 mm. Moreover, the helical angle β of the helical groove 3b was 180°. Furthermore, the length of the neck portion 3c was 2 mm, and the diameter of the neck portion 3c was 3 mm. Moreover, the length of the second shaft portion 4 was 10 mm, and the diameter of the second shaft portion 4 was 3 mm. In the rivet 1a, the length (height) of the head portion 2 in the axial direction was 3 mm, the tilt angle θ1 of the head portion 2 was 20°, and the thickness of the peripheral edge portion 2b was 1 mm. In the rivet 1b, the length (height) of the head portion 2 in the axial direction was 2.4 mm, the tilt angle θ1 of the head portion 2 was 10°, the thickness of the peripheral edge portion 2b around the center portion was 1 mm, and the thickness of the peripheral edge portion was 0.2 mm.

The first to-be-fastened member 40 was a quadrilateral-prism-shaped block member that had a square cross section with a vertical length of 12 mm and a horizontal length of 12 mm and that had a height of 35 mm. The taper angle θ3 (FIG. 6) of the hole portion 43 was 5°. ADC12 was used as the material of the first to-be-fastened member 40.

The second to-be-fastened member 50 was a plate member with a vertical length of 80 mm, a horizontal length of 30 mm, and a thickness of 2.0 mm. A5052-H34 was used as the material of the second to-be-fastened member 50.

In the riveting apparatus 10, the air pressure generated by the air compressor 11 was set to 0.75 MPa. Moreover, the driving speed by the riveting apparatus 10 was set to 70 m/sec.

The weight of the auxiliary member 21 was about 14.4 g.

In the experiment data 1 of FIG. 11, an experiment was performed with the rivet 1a or the rivet 1b selectively used in each of the examples and the comparative examples and with the tilt angle θ1 (see FIG. 2. Regarding the rivet 1b, the tilt angle of the lower surface of the peripheral edge portion 2b is set as the tilt angle θ1) of the head portion 2 of the rivet 1a (or rivet 1b), the thickness (referring to the thickness of the thinnest peripheral edge end for the rivet 1b) of the peripheral edge portion 2b of the head portion 2, the opening diameter φ1 (FIG. 6) of the hole portion 43 of the prepared hole 41, the taper angle θ2 (FIG. 6) of the opening portion 42 of the prepared hole 41, and the height (depth) of the opening portion 42 set to various values for the respective examples and comparative examples.

Results of the experiment data 1 are shown in FIG. 11.

### <Examples A>

In an example A11, the rivet 1a was used, the tilt angle θ1 was 20°, the thickness of the peripheral edge portion 2b was 1.0 mm, the opening diameter φ1 of the hole portion 43 was 4.01 mm, the depth of the hole portion 43 was 15 mm, the taper angle θ2 of the opening portion 42 was 60°, and the height (depth) of the opening portion 42 was 1 mm.

In an example A12, the experiment was performed as in the example A11 except for setting the taper angle θ2 of the opening portion 42 to 75°.

In an example A13, the experiment was performed as in the example A11 except for setting the taper angle θ2 of the opening portion 42 to 90°.

In an example A14, the experiment was performed as in the example A11 except for setting the taper angle θ2 of the opening portion 42 to 105°.

In an example A15, the experiment was performed as in the example A11 except for setting the taper angle θ2 of the opening portion 42 to 120°.

In an example A31, the experiment was performed as in the example A11 except for using the rivet 1b, setting the tilt angle θ1 to 10°, and setting the thickness of the peripheral edge portion 2b to 0.2 mm.

In an example A32, the experiment was performed as in the example A12 except for using the rivet 1b.

In an example A33, the experiment was performed as in the example A13 except for using the rivet 1b.

In an example A34, the experiment was performed as in the example A14 except for using the rivet 1b.

In an example A35, the experiment was performed as in the example A15 except for using the rivet 1b.

### <Comparative Examples A>

In a comparative example A21, the experiment was performed as in the example A11 except for setting the height (depth) of the opening portion 42 to 2 mm.

In a comparative example A22, the experiment was performed as in the example A12 except for setting the height (depth) of the opening portion 42 to 2 mm.

In a comparative example A23, the experiment was performed as in the example A13 except for setting the height (depth) of the opening portion 42 to 2 mm.

In a comparative example A24, the experiment was performed as in the example A14 except for setting the height (depth) of the opening portion 42 to 2 mm.

In a comparative example A25, the experiment was performed as in the example A15 except for setting the height (depth) of the opening portion 42 to 2 mm.

In a comparative example A41, the experiment was performed as in the example A31 except for setting the height (depth) of the opening portion 42 to 2 mm.

In a comparative example A42, the experiment was performed as in the example A32 except for setting the height (depth) of the opening portion 42 to 2 mm.

In a comparative example A43, the experiment was performed as in the example A33 except for setting the height (depth) of the opening portion 42 to 2 mm.

In a comparative example A44, the experiment was performed as in the example A34 except for setting the height (depth) of the opening portion 42 to 2 mm.

In a comparative example A45, the experiment was performed as in the example A35 except for setting the height (depth) of the opening portion 42 to 2 mm.

In the comparative example A51, the rivet 1a was used. In the prepared hole 41 in the comparative example A51, the first to-be-fastened member 40 was provided with no opening portion 42, the opening diameter φ1 of the hole portion 43 was 4.1 mm, the taper angle was 5°, and the depth of the hole portion 43 was 16 mm. The hole portion 43 was directly opened on the front surface 40a of the first to-be-fastened member 40. There were no taper angle θ2 of the opening portion 42 or height (depth) of the opening portion 42.

In a comparative example A52, the experiment was performed as in the comparative example A51 except for using the rivet 1b.

### <Studies>

As shown in the evaluation of each example in the experiment data 1 of FIG. 11, it is found that no cracking occurs in the fastened product 60, occurrence of leak in the fastened product 60 is suppressed, and sufficient joint strength is obtained when the relationship of "0.25×T<H<0.75×T" is established, where H is the depth (height) of the opening portion 42 in the prepared hole 41 (FIG. 6) and T is the thickness of the second to-be-fastened member 50 at the driving position of the rivet 1a or 1b.

Moreover, it is found that setting the taper angle θ2 (FIG. 6) of the opening portion 42 in the prepared hole 41 to 70 to 110° suppresses occurrence of leak in the fastened product 60.

In the case where the thickness of the peripheral edge portion 2b of the head portion 2 in the rivet 1a or 1b is substantially in the range of 0.1 to 2.0 mm, results of no leak in all fastened products 60 or leak in some of the fastened products 60 are obtained as the results of the leak test. Accordingly, it is found that the leak resistance can be improved to a certain level.

Moreover, it is found that, in the case where the tilt angle θ1 of the head portion 2 in the rivet 1a or the rivet 1b is in the range of 5 to 30°, good evaluation results are obtained.

FIG. 13 is a cross-sectional view of the fastened product 60 created in the example A33. As shown in FIG. 13, according to the present example, it can be found that the first to-be-fastened member 40 and the second to-be-fastened member 50 are fastened to each other without a gap therebetween. It can be found that, in this case, the space in the opening portion 42 surrounded by the opening portion 42 of the first to-be-fastened member 40 and the back surface 50a of the second to-be-fastened member 50 is filled with parts formed by the deformation of the second to-be-fastened member 50. Moreover, the first shaft portion 3 and the first to-be-fastened member 40 are also connected to each other without a gap therebetween. Furthermore, it is found that a part of the first to-be-fastened member 40 has entered the helical groove 3b of the first shaft portion 3, and the rivet 1b is inserted while rotating and cutting the first to-be-fastened member 40.

### [Experiment Data 2]

In the experiment data 2, experiments were performed as in the example A14 of the experiment data 1 except for setting the helical angle β (FIG. 3) to various values in each example.

Results of the experiment data 2 are shown in FIG. 12.

### <Examples C>

The helical angle β was set to 53° in an example C11, 105° in an example C12, 180° in an example C13, 210° in the example C14, and 315° in an example C15. Note that the example A14 and the example C13 are the same data.

### <Studies>

It is found from the examples of the experiment data 2 that, in the case where the helical angle β is in the range of about 60 to 360°, no cracking occurs in the fastened product 60, the fastened product 60 has sufficient leak resistance, and the tensile strength of the fastened product 60 is sufficiently high, resulting in favorable evaluation results.

### Reference Signs List

- 1a: rivet
- 1b: rivet
- 2: head portion
- 2a: center portion
- 2b: peripheral edge portion
- 3: first shaft portion
- 3a1: tip end portion
- 3a2: base end portion
- 3a3: tip end
- 3b: helical groove (groove)
- 4: second shaft portion
- 5: bulging portion
- 21: auxiliary member
- 21b: inner peripheral surface (holding portion)
- 30: to-be-fastened members
- 40: first to-be-fastened member
- 40a: front surface
- 41: prepared hole
- 42: opening portion
- 43: hole portion
- 50: second to-be-fastened member
- 50a: back surface
- 50b: front surface
- 60: fastened product
- H: height (depth)
- T: thickness
- θ1: tilt angle
- θ2: taper angle of opening portion
- θ3: taper angle of prepared hole
- β: helical angle

## Claims

1. A riveting method comprising:
a preparation step of laying a back surface of a second to-be-fastened member on a front surface of a first to-be-fastened member having a prepared hole; and
a riveting step of moving a metal rivet set at a position away from a front surface of the second to-be-fastened member toward a position of the prepared hole, and driving the rivet into the second to-be-fastened member and the first to-be-fastened member in this order to cause the rivet to reach an inside of the prepared hole, wherein
the prepared hole includes a hole portion having an inner wall surface with a substantially cone shape or a substantially truncated cone shape that is a tapered shape and an opening portion that spreads and opens in a tapered shape from the hole portion toward the front surface of the second to-be-fastened member,
the rivet includes a first shaft portion with a tapered shape,
the first shaft portion includes a tip end portion whose diameter decreases toward a tip end side,
a groove is carved on an outer peripheral surface of the first shaft portion from a base end side toward the tip end side of the first shaft portion, and
0.25×T<H<0.75×T is satisfied, where H is a depth of the opening portion and T is a thickness of the second to-be-fastened member at a driving position of the rivet.

2. The riveting method according to claim 1, a taper angle of the opening portion is 70 to 110°.

3. The riveting method according to claim 1, wherein an opening diameter of the hole portion is larger than a diameter of a base end portion of the first shaft portion.

4. The riveting method according to claim 1, wherein a relationship between an opening diameter φ1 of the hole portion and a diameter φ2 of a base end portion of the first shaft portion is 1.0×φ2<φ1≤1.1×φ2.

5. The riveting method according to claim 1, wherein a taper angle of the hole portion is 2 to 10°.

6. The riveting method according to claim 1, wherein
the rivet further includes a head portion extending from a base end of the first shaft portion,
the first shaft portion extends downward from the head portion,
the head portion includes a center portion connected to the first shaft portion and a peripheral edge portion spreading outward from the center portion, and
a diameter of the peripheral edge portion is larger than a diameter of the first shaft portion.

7. The riveting method according to claim 6, wherein the head portion has an umbrella shape in which the peripheral edge portion spreads while being tilted toward the first shaft portion side.

8. The riveting method according to claim 6, wherein a thickness of the peripheral edge portion of the head portion is 0.1 to 2.0 mm.

9. The riveting method according to claim 6, wherein a tilt angle of the head portion is 5 to 30°.

10. The riveting method according to claim 1, wherein
the groove is a helical groove formed in a helical shape on an outer surface of the first shaft portion, and
in the riveting step, the rivet set at the position away from the front surface of the second to-be-fastened member is moved toward the position of the prepared hole in a non-rotating state, and is made to reach the inside of the prepared hole by being screwed into the second to-be-fastened member and the first to-be-fastened member in this order while being rotated.

11. The riveting method according to claim 10, wherein a helical angle of the helical groove is 60 to 360°.

12. The riveting method according to claim 6, wherein
the rivet further includes a second shaft portion extending from the head portion, on the opposite side of the head portion to the first shaft portion, and
in the riveting step, an auxiliary member having a holding portion configured to hold the second shaft portion is used, and the rivet is moved toward the position of the prepared hole together with the auxiliary member with the auxiliary member holding the second shaft portion.

13. The riveting method according to claim 1, wherein the first to-be-fastened member and the second to-be-fastened member are made of aluminum or an aluminum alloy.

14. The riveting method according to claim 1, wherein the first to-be-fastened member is made of aluminum or an aluminum alloy, and the second to-be-fastened member is a plate member made of a resin.

15. The riveting method according to claim 1, wherein the first to-be-fastened member is a casted member.

16. A fastened product comprising:
a first to-be-fastened member having a prepared hole;
a second to-be-fastened member whose back surface is laid on a front surface of the first to-be-fastened member; and
a metal rivet driven into the second to-be-fastened member and the first to-be-fastened member in this order to reach an inside of the prepared hole, wherein
the prepared hole includes a hole portion having an inner wall surface with a substantially cone shape or a substantially truncated cone shape that is a tapered shape and an opening portion that spreads and opens in a tapered shape from the hole portion toward a front surface of the second to-be-fastened member,
the rivet includes a first shaft portion with a tapered shape,
the first shaft portion includes a tip end portion whose diameter decreases toward a tip end side,
a groove is carved on an outer peripheral surface of the first shaft portion from a base end side toward the tip end side of the first shaft portion, and
0.25×T<H<0.75×T is satisfied, where H is a depth of the opening portion and T is a thickness of the second to-be-fastened member at a driving position of the rivet.
